# FASCICULE DE BREVET EUROPEEN

(11) **EP 2 312 237 B1**
(45) Date de publication et mention de la délivrance du brevet: **07.05.2014**
(21) Numéro de dépôt: 10187457.6
(22) Date de dépôt: 13.10.2010
(51) Int. Cl.: F24J 3/08, F16L 11/22

(54) **Sonde géothermique**
Erdwärmesonde
Geothermal probe

(30) Priorité: 16.10.2009 FR 0957256
(43) Date de publication de la demande: 20.04.2011
(73) Titulaire: Unistar Europe, 92100 Boulogne Billancourt (FR)
(72) Inventeur: Fancello, Michele, 06000, NICE (FR); Matzuzzi, Jean-Antoine, 06000, NICE (FR)
(74) Mandataire: Decobert, Jean-Pascal

(56) Documents cités:
- EP-A1- 0 582 118
- EP-A2- 0 231 504
- DE-B3- 10 243 714
- DE-C1- 4 016 726
- DE-U1- 20 115 397
- FR-A3- 2 562 730
- US-A1- 2005 121 169
- US-A1- 2005 211 437

## Description

L'invention concerne une sonde géothermique.

Le renchérissement et la pollution induite par les sources d'énergie fossile conduisent tant les particuliers que les professionnels à s'orienter vers d'autres modes de chauffage ou de rafraîchissement des bâtiments. C'est ainsi que se sont développées des installations géothermiques consistant à exploiter une différence de température entre l'air ambiant et le sol pour, par le biais d'un échange de chaleur, produire soit un chauffage soit un refroidissement dans un bâtiment.

Les installations classiques comportent un circuit pour un fluide caloporteur enterré et relié par un système de pompe à chaleur à une installation de régulation de température dans un bâtiment. Suivant une première solution, le circuit comporte une pluralité de sondes consistant chacune en un tuyau de longueur non négligeable, les sondes parcourant une surface sensiblement horizontale enterrée à une profondeur prédéterminée dans le sol. Une autre possibilité consiste à utiliser un circuit fortement verticalisé dans lequel des trous sont formés dans le sol, par exemple par carottage, pour y autoriser le déploiement des sondes par paires de sorte à former le trajet aller et le trajet retour de la portion ainsi enterrée. Après le déploiement des sondes, on rebouche le trou de façon usuelle et on raccorde les sondes verticales au reste du circuit.

Les sondes actuellement utilisées peuvent être de longueur relativement importante de sorte à bénéficier du gradient de température le plus élevé possible. Les tuyaux constituant les sondes actuelles sont stockés sous forme d'enroulements et sont déroulés au fur et à mesure de leur déploiement dans les trous généralement par jeu de 2 ou de 4 rouleaux. Cependant, comme indiqué précédemment, les tuyaux doivent être déployés par paires dans les trous ce qui implique une simultanéité de déroulement. Cette exigence de synchronisme est particulièrement difficile à obtenir et l'on constate souvent des décalages de descente dans les trous compliquant fortement la phase d'installation. Aussi bien dans le cas où il y a 4 rouleaux ou 2 rouleaux, il y a un appareil qui doit dérouler simultanément les 2 (ou plus) rouleaux. Si le tube (les longueurs sont importantes) d'une bobine s'entrecroise, cela peut agir comme un frein et bloquer le déroulement de l'autre bobine, rendant la descente du tube dans le trou problématique.

On constate par ailleurs que l'installateur a recours à une grande quantité de tuyaux enroulés ce qui gêne tant le stockage que la manutention des éléments constitutifs du circuit. Les tuyaux ont toujours tendance à s'enchevêtrer. Ceci d'autant plus gênant que l'on déploie généralement deux paires de tuyaux par trou et qu'une installation classique comporte plusieurs trous.

Actuellement, le diamètre du trou du forage est très important et donc très coûteux en temps, main d'oeuvre et matériel, car il est impossible de faire descendre convenablement les tubes et d'éviter par exemple les frottements sur les parois.

Enfin, pour éviter les problèmes de déroulement des rouleaux durant les phases de transport, manutention et stockage, les palettes contenant les rouleaux sont filmées avec des plastiques thermoretractables très résistants et une main d'oeuvre importante.

On a déjà cherché, par le document US A1 2005/0121169 à relier ensemble les tubes de circulation du fluide. Suivant cette antériorité, un élément de raccordement de tube est conçu sous forme de portion plane intercalaire. Cependant, malgré la cohésion ainsi obtenue entre les tubes, cette technique ne fournit pas la flexibilité suffisante à la bonne manipulation de l'ensemble constitué. Par conséquent, ce type de conduit n'est pas facilement utilisable pour dérouler les conduits, les implanter correctement dans des trous de diamètre raisonnable.

On connaît du document FR-A3-2562730 une garniture de canalisation pour câbles. Elle comporte plusieurs gaines reliées par des membranes de liaison, formant ainsi une nappe de gaines. La géométrie de cette nappe est adaptée pour assurer une déformation joignant les deux bords longitudinaux de la nappe pour former un faisceau de gaines. Cet objectif est très spécifique.

La présente invention permet de remédier en tout ou partie aux inconvénients des techniques connues jusqu'à présent et présente à cet effet une sonde géothermique comportant deux conduits parallèles et une membrane intermédiaire joignant les conduits. Suivant une caractéristique, la membrane a une épaisseur inférieure à celle de la paroi des conduits et ses zones de jonction avec les conduits comportent des congés de raccordement sur chaque conduit.

La membrane est une nappe continue d'épaisseur constante entre les deux zones de jonction. Ainsi, aucune zone de faiblesse mécanique n'est formée sur la membrane, tout en préservant la possibilité d'une épaisseur réduite donc une bonne flexibilité en enroulement.

Alors que l'on aurait naturellement tendance à assurer une jonction entre les conduits aussi rigide que possible pour des raisons de résistance mécanique, la présente invention fait le choix d'une épaisseur réduite pour assurer une flexibilité permettant l'enroulement de la sonde et son déroulement au moment de l'installation. Dans le même temps, l'invention assure une grande résistance mécanique de l'ensemble constitué aux moyens de congés de raccordement évitant toute brusque variation dimensionnelle au sein de l'ensemble et par conséquent supprimant les concentrations de contraintes au niveau des jonctions entre la membrane et les conduits.

Suivant d'autres dispositions avantageuses, la sonde selon l'invention présente une largeur de membrane sélectionnée de sorte à limiter l'encombrement mais dans le même temps à limiter les transferts de chaleur entre les deux conduits. En effet, l'un des conduits est généralement le vecteur d'une circulation descendante de fluide froid alors que l'autre conduit est le moyen de remonter du fluide réchauffé. En optimisant l'écartement entre les conduits, la membrane permet leur isolation et donc l'amélioration du bilan thermique de l'ensemble de l'installation.

A titre préféré, on sélectionne un rapport dimensionnel entre l'épaisseur de la membrane et l'épaisseur de la paroi des conduits de sorte à produire un ensemble dont les capacités de déformation notamment en enroulement et en déroulement sont optimales.

Suivant une autre disposition avantageuse, la sonde comprend un embout dont la configuration permet de relier les extrémités des conduits et, suivant une disposition avantageuse, qui permet un lestage de sorte à faciliter l'implantation de la sonde dans un trou.

D'autres but et avantages apparaîtront au cours de la description qui suit qui présente un mode de réalisation préféré mais non limitatif de l'invention.

Auparavant, il est rappelé que la présente invention concerne une sonde géothermique, comportant deux conduits parallèles et une membrane intermédiaire joignant les conduits, caractérisée par le fait que la membrane a une épaisseur inférieure à celle de la parois des conduits et que ses zones de jonction avec les conduits comportent des congés de raccordement sur chaque conduit.

La membrane est une nappe continue le long de la sonde et son épaisseur est constante entre les zones de jonction.

On introduit ci après différents modes de réalisation indicatifs et non limitatifs de l'invention :
- Sonde dans laquelle l'épaisseur de la membrane est comprise entre 0,7 mm et 1,7 mm.
- l'épaisseur de la membrane est comprise entre 1 mm et 1,4 mm.
- l'épaisseur de la membrane est de 1,2 mm.
- le rayon des congés de raccordement est de 2 mm.
- la longueur de la membrane est comprise entre 10 mm et 16 mm.
- Sonde dans laquelle la longueur de la membrane est de l'ordre de 10 fois l'épaisseur de la membrane.
- la membrane est une nappe continue le long de la sonde.
- les conduits et la membrane sont formés d'une seule pièce extrudée.
- les conduits sont des tubes de section circulaire et dont les parois ont une épaisseur comprise entre 2,7 mm et 3,1 mm.
- elle comporte un embout reliant les conduits à leur extrémité distale.
- l'embout comporte un moyen de fixation d'un lest.
- le moyen de fixation comporte deux trous d'accrochage situés symétriquement de part et d'autre de l'axe longitudinale de la sonde.
- l'embout comporte une portion de connexion femelle dans laquelle s'insère l'extrémité distale des conduits.

L'invention concerne également une installation géothermique incorporant au moins une sonde selon l'invention ainsi qu'un procédé de fabrication et une utilisation de la sonde.

Le procédé de fabrication comprend les étapes suivantes :
- réalisation par extrusion d'un seul tenant des conduits et de la membrane,
- au cours de l'extrusion, positionnement de l'embout à l'extrémité distale des conduits, l'embout étant monté sur des moyens de déplacement ayant le même mouvement et la même vitesse que ceux de l'extrusion,
- raccordement par soudage des conduits et de l'embout.

Les dessins ci-joints sont donnés à titre d'exemples et ne sont pas limitatifs de l'invention. Ils représentent seulement un mode de réalisation de l'invention et permettront de la comprendre aisément.

Les figures 1 et 2 schématisent un mode d'installation classique pour la géothermie utilisant, pour la figure 1 des tubes traditionnels et, pour la figure 2, des conduits formés dans une sonde selon l'invention.

Les figures 3 et 4 montrent un mode traditionnel de réalisation des conduits de façon totalement distincte.

Les figures 5 à 11 montrent un mode de mise en oeuvre de l'invention avec :

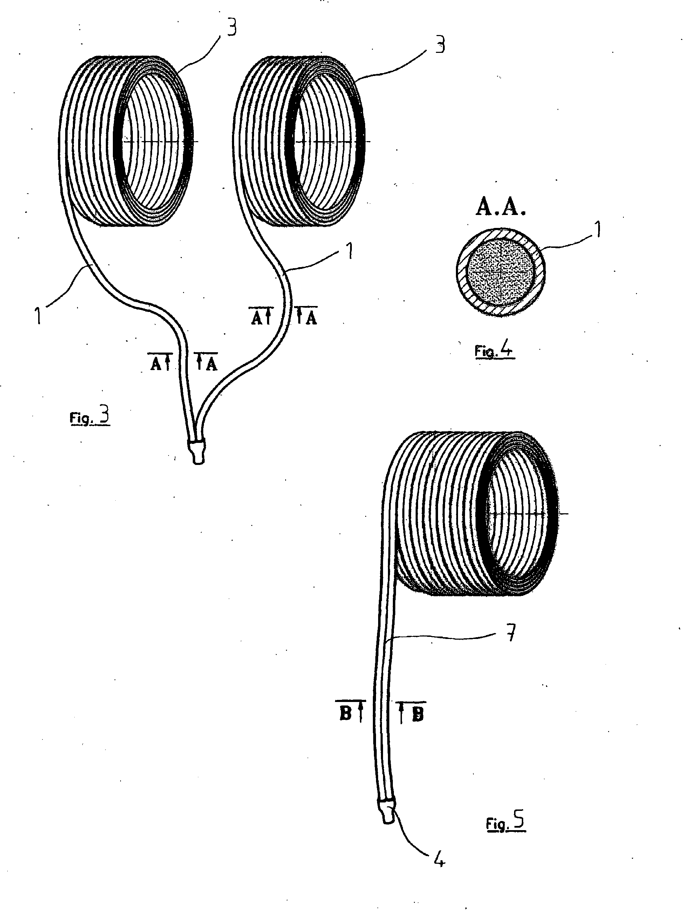

- la figure 5 schématisant une possibilité d'enroulement de la sonde selon l'invention.

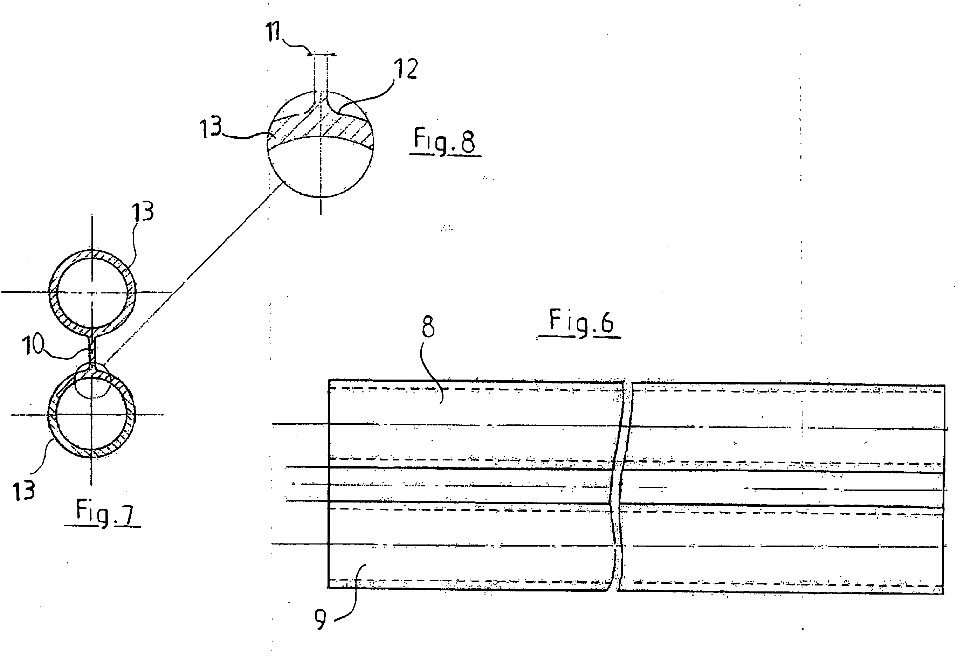

- la figure 6 montre une vue partielle de dessus de la sonde.
- la figure 7 montre une vue en coupe transversale dont un détail est donné en figure 8.

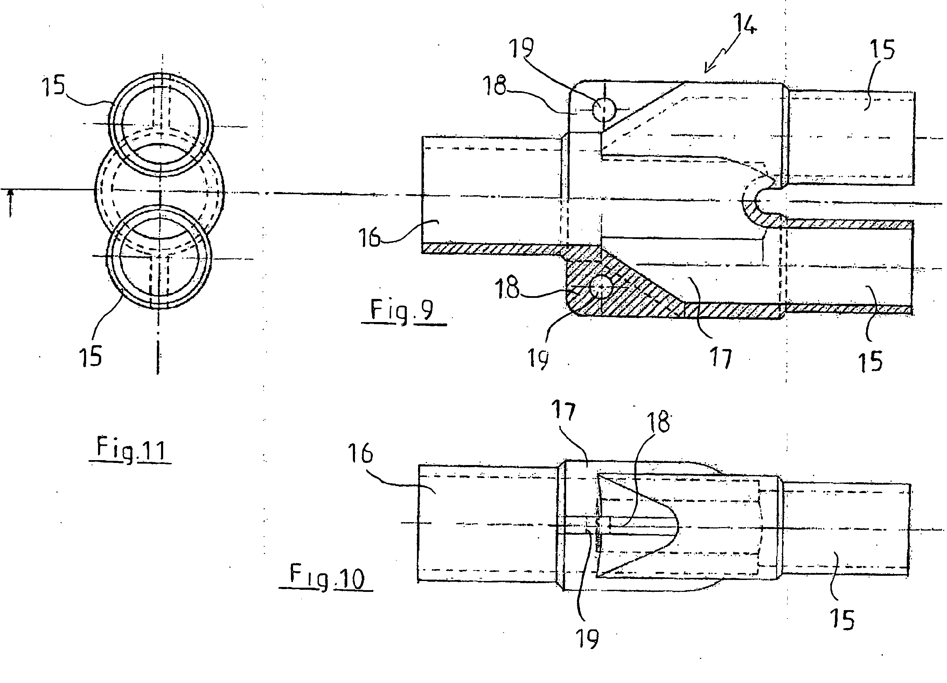

- la figure 9 montre une vue partiellement en coupe d'un embout selon l'invention.
- la figure 10 est une vue de profil et la figure 11 une vue de dessus.

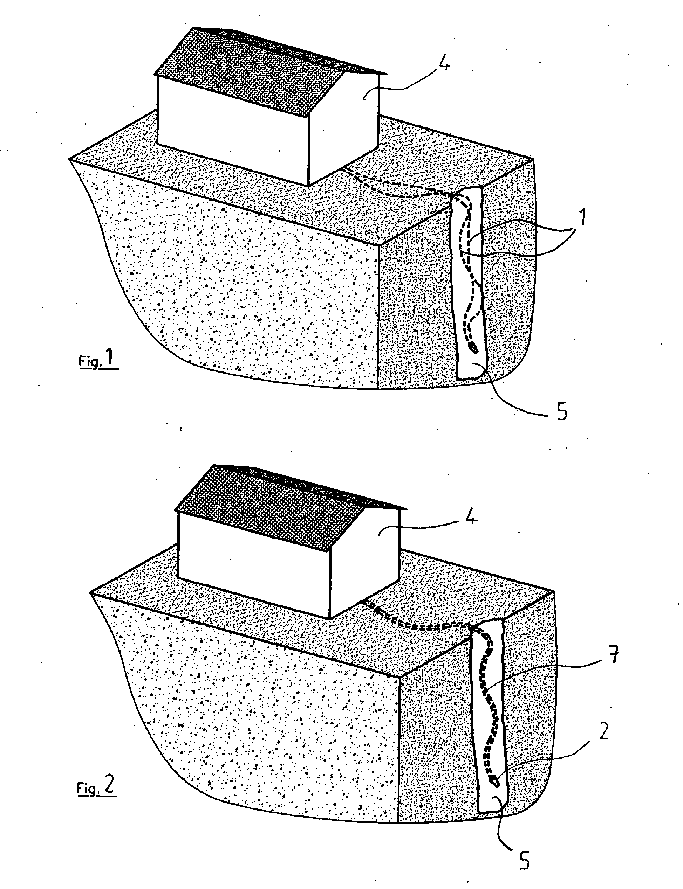

La figure 1 ne reflète pas un circuit géothermique complet mais illustre les difficultés de mise en place des tuyaux actuels. La figure 2 montre au contraire l'intérêt de l'invention.

L'arrangement présenté en figure 3 et 4 illustre clairement que les enroulements 3 utilisés jusqu'à présent n'assurent pas un déploiement efficace et pratique des tubes 1. En particulier, chaque tube 1 a tendance à prendre sa propre orientation et toute perturbation dans la vitesse de déroulement engendre des problèmes de mise en place des tubes 1 dans l'installation géothermique. Dans le cas d'un déploiement dans des trous, on constate des mises en contact des tubes 1 avec les parois du trou ce qui génère des blocages et rend difficile l'insertion des tubes jusqu'au fond du trou. Bien que non représenté, une solution classique utilisée par les géotechniciens consiste à déployer plusieurs paires de tubes dans un seul trou. Dans ce cas, le problème posé par les perturbations de déploiement des tubes 1 est d'autant plus élevé.

Au contraire, l'invention assure la cohésion des tubes durant les phases de stockage et d'installation tout en préservant la flexibilité suffisante de l'assemblage de la sonde.

Dans ce cadre, une sonde d'aspect général représentée à la figure 5 est présentée plus en détail aux figures 6 à 8.

En particulier, sont représentés deux conduits 8, 9 de section circulaire ayant une paroi d'épaisseur de l'ordre de 2,9 millimètres pour un diamètre extérieur de 32 millimètres. Ce cas n'est pas limitatif et le demandeur a notamment constaté que l'invention donnait satisfaction avec des conduits 8, 9 de diamètre extérieur de 40 millimètres et de même épaisseur de parois.

Les conduits 8, 9 sont maintenus espacés mais rejoints au moyen d'une membrane 10 présentant sensiblement une forme de nappe allongée suivant la direction longitudinale de la sonde 7 et avantageusement continue réalisée par extrusion. La largeur (ou longueur de l'espacement qu'elle procure entre les conduits 8, 9) de la membrane 10 est avantageusement sélectionnée de sorte à assurer une bonne isolation thermique entre les deux conduits 8, 9 mais dans le même temps à limiter l'encombrement de l'ensemble et à ajuster les capacités de déformation en flexion de la membrane 10. A cet effet, on choisit avantageusement une longueur de membrane sensiblement équivalente à dix fois l'épaisseur de la membrane. Dans le cas illustré, pour une épaisseur de 1,2 millimètres, la largeur de la membrane est de l'ordre de 12 millimètres.

L'épaisseur 11 de la membrane 10 est inférieure à l'épaisseur de la paroi 13 des conduits 8, 9. Cette épaisseur est continue de sorte à éviter les zones de concentration de contrainte ou de rigidité.

A titre d'exemple préféré, les travaux du demandeur ont montré qu'une épaisseur de membrane 10 comprise entre 0,7 millimètre et 1,7 millimètres donnait satisfaction. A titre encore préféré, une sélection plus restreinte entre 1 millimètre et 1,4 millimètres peut être choisi. Dans le cas représenté, on a choisi les rapports de dimensions suivantes :
- épaisseur de la membrane : 1,2 millimètres
- largeur de la membrane 10 : 13 millimètres
- diamètre extérieur des conduits 8, 9 : 32 millimètres
- épaisseur des parois 13 des conduits 8, 9 : 2,9 millimètres

Les fourchettes dimensionnelles des différents composants de la sonde tel que décrit précédemment ont révélé, à titre surprenant, que le comportement mécanique de la sonde s'en trouvait amélioré.

Par ailleurs, la sonde comporte avantageusement des congés de raccordement 12 au niveau de la jonction entre la membrane 10 et les conduits 8, 9. Avantageusement, quatre congés sont formés, deux congés 12 pour le raccordement avec le conduit 8 et deux congés 12 pour le raccordement avec le conduit 9. Les congés forment des arrondis permettant une liaison d'épaisseur dégressive entre chaque conduit et la membrane, sans brusque variation d'épaisseur.

A titre préféré, le rayon des congés de raccordement 12 est identique et peut être fixé à la valeur de 2 millimètres qui donne entière satisfaction notamment pour la résistance à l'arrachement entre la membrane 10 et les conduits 8, 9. Sans gêner la flexibilité de l'ensemble, un tel congé de raccordement renforce notablement la résistance mécanique.

En partie inférieure des conduits, il est prévu un embout 14 présenté de façon générale en figure 5 et détaillé aux figures 9 à 11.

La figure 9 montre en particulier la formation d'un embout 14 avec un corps principal 17 comprenant un volume intérieur faisant se rejoindre les extrémités distales des conduits 8, 9. Pour le raccordement entre les conduits 8, 9 et l'embout 14, des portions d'emmanchement 15 sont prévues. A l'opposé des portions 15, une base 16 s'inscrit dans la continuité du volume du corps principal 17 en faisant office de siphon.

A titre préféré, le corps 17 ou tout autre partie de l'embout 14 comprend des moyens de fixation d'un leste. Grâce à cette configuration, on peut rapporter à la sonde un élément de poids suffisamment élevé pour faciliter l'introduction de la sonde dans le trou lors de son installation.

Dans le cas illustré, les moyens de fixation comportent au moins un trou d'accrochage 19 et avantageusement deux trous 19. Aux figures, les trous 19 sont situés sur des ailes 18 s'étendant latéralement vers la base 16 en dessous du corps 17. Cette configuration n'est pas limitative.

Elle a l'avantage de constituer un ensemble équilibré pour la descente optimale de la sonde dans un trou.

On décrit ci après un procédé de fabrication apte à la production de la sonde selon l'invention.

Une machine d'extrusion est utilisée pour la production linéaire de la sonde. Cette dernière est avantageusement en polyéthylène haute densité. A la sortie de l'extrudeuse, l'embout 14 est solidarisé à la sonde par un dispositif de soudage se déplaçant à la même vitesse que celle d'extrusion, si bien que l'embout est rapporté sur la sonde sans nécessiter une étape séparée et un poste de fabrication supplémentaire. L'ensemble n'a plus qu'à être enroulé et cerclé sans manipulation supplémentaire.

Il s'agit d'un progrès technique rendu possible par l'invention relativement aux méthodes antérieures de réalisation de sondes, dans lesquelles il fallait opérer les étapes suivantes :
- Extrusion premier tube
- Extrusion deuxième tube
- Enroulement premier tube (+ cerclage)
- Enroulement deuxième tube (+ cerclage)
- Transport premier et deuxième tube vers la machine à souder
- Coupure des cerclages aux extrémités du premier et deuxième tube
- Positionnement des deux tubes sur les mors de la machine
- Soudure de l'embout
- Nouveau cerclage des extrémités de la demi-sonde.

### REFERENCES

- 1.: Tube
- 2.: Embout
- 3.: Enroulement
- 4.: Bâtiment
- 5.: Trou
- 6.: Sol
- 7.: Sonde
- 8.: Conduit
- 9.: Conduit
- 10.: Membrane
- 11.: Epaisseur
- 12.: Congé
- 13.: Paroi
- 14.: Embout
- 15.: Portion d'emmanchement
- 16.: Base
- 17.: Corps principal
- 18.: Aile
- 19.: Trou

## Revendications

1. Sonde (7) géothermique, comportant seulement deux conduits (8, 9) parallèles et une membrane (10) intermédiaire joignant les deux conduits (8, 9), dans laquelle la membrane (10) est une nappe continue le long de la sonde (7) et a une épaisseur constante entre les zones de jonction de la membrane (10) avec les deux conduits (8, 9), **caractérisé par le fait que** la membrane (10) a une épaisseur inférieure à celle de la paroi (13) des deux conduits (8, 9), que les zones de jonction comportent des congés (12) de raccordement sur chaque conduit (8, 9), le rayon des congés (12) de raccordement étant de 2 mm, et que la longueur de la membrane (10) est de l'ordre de 10 fois l'épaisseur de la membrane (10).

2. Sonde (7) selon la revendication précédente dans laquelle l'épaisseur de la membrane (10) est comprise entre 0,7 mm et 1,7 mm.

3. Sonde (7) selon la revendication 1 dans laquelle l'épaisseur de la membrane (10) est comprise entre 1 mm et 1,4 mm.

4. Sonde (7) selon la revendication 1 dans laquelle l'épaisseur de la membrane (10) est de 1,2 mm.

5. Sonde (7) selon l'une des revendications précédentes dans laquelle la longueur de la membrane (10) est comprise entre 10 mm et 16 mm.

6. Sonde (7) selon l'une des revendications précédentes dans laquelle les conduits (8, 9) et la membrane (10) sont en polyéthylène haute densité formés d'une seule pièce extrudée.

7. Sonde (7) selon l'une des revendications précédentes dans laquelle les conduits (8, 9) sont des tubes de section circulaire et dont les parois ont une épaisseur comprise entre 2,7 mm et 3,1 mm.

8. Sonde (7) selon l'une des revendications précédentes comportant un embout (14) reliant les conduits (8, 9) à leur extrémité distale.

9. Sonde (7) selon la revendication précédente dans laquelle l'embout (14) comporte un moyen de fixation d'un lest.

10. Sonde (7) selon la revendication précédente dans laquelle le moyen de fixation comporte deux trous d'accrochage situés symétriquement de part et d'autre de l'axe longitudinale de la sonde (7).

11. Sonde (7) selon l'une des revendications 8 à 10 dans laquelle l'embout (14) comporte une portion d'emmanchement (15) femelle dans laquelle s'insère l'extrémité distale des conduits (8, 9).

12. Installation géothermique comportant au moins une sonde (7) selon l'une des revendications précédentes.

13. Procédé de fabrication d'une sonde selon l'une des revendications 8 à 11 comportant les étapes suivantes :
- réalisation par extrusion d'un seul tenant des conduits (8, 9) et de la membrane (10),
- au cours de l'extrusion, positionnement de l'embout (14) à l'extrémité distale des conduits (8, 9), l'embout (14) étant monté sur des moyens de déplacement ayant le même mouvement et la même vitesse que ceux de l'extrusion,
- raccordement par soudage des conduits (8, 9) et de l'embout (14) par un dispositif de soudage se déplaçant à la même vitesse que celle d'extrusion.

## Patentansprüche

1. Erdwärmesonde (7), umfassend nur zwei parallele Leiter (8, 9) und eine die Leiter (8, 9) verbindende intermediäre Membran (10), in der die Membran (10) eine kontinuierliche Dicke entlang der Sonde (7) ist und eine konstante Fläche zwischen Verbindungsbereichen der Membran (10) mit den Leitern (8, 9)hat, **gekennzeichnet durch** die Tatsache, dass die Membran (10) eine kleinere Dicke hat als die der Wand (13) der Leiter (8, 9), dass die Verbindungsbereiche Anschlusskehlen (12) auf jedem Leiter (8, 9) umfassen, wobei der Radius der Anschlusskehlen (12) 2 mm beträgt und die Länge der Membran (10) in der Größenordnung des 10-Fachen der Dicke der Membran (10) liegt.

2. Sonde (7) gemäß dem voranstehenden Anspruch, in der die Dicke der Membran (10) zwischen 0,7 mm und 1,7 mm inbegriffen ist.

3. Sonde (7) gemäß Anspruch 1, in der die Dicke der Membran (10) zwischen 1 mm und 1,4 mm inbegriffen ist.

4. Sonde (7) gemäß Anspruch 1, in der die Dicke der Membran (10) 1,2 mm beträgt.

5. Sonde (7) gemäß einem der voranstehenden Ansprüche, in der die Länge der Membran (10) zwischen 10 mm und 16 mm inbegriffen ist.

6. Sonde (7) gemäß einem der voranstehenden Ansprüche, in der die Leiter (8, 9) und die Membran (10) aus hochdichtem Polyethylen und aus einem einzigen extrudierten Teil geformt sind.

7. Sonde (7) gemäß einem der voranstehenden Ansprüche, in der die Leiter (8, 9) Röhren mit kreisförmigem Querschnitt sind und deren Wände eine zwischen 2,7 mm und 3,1 mm inbegriffene Dicke haben.

8. Sonde (7) gemäß einem der voranstehenden Ansprüche, umfassend ein Ansatzstück (14), das die Leiter (8, 9) an ihrem distalen Ende verbindet.

9. Sonde (7) gemäß dem voranstehenden Anspruch, in der das Ansatzstück (14) ein Befestigungsmittel eines Ballasts umfasst.

10. Sonde (7) gemäß dem voranstehenden Anspruch, in der das Befestigungsmittel zwei Befestigungslöcher umfasst, die sich symmetrisch auf jeder Seite der Längsachse der Sonde (7) befinden.

11. Sonde (7) gemäß Anspruch 8 bis 10, in der das Ansatzstück (14) einen weiblichen Einsteckabschnitt (15) umfasst, in den das distale Ende der Leiter (8, 9) eingefügt wird.

12. Erdwärmeanlage, umfassend wenigstens eine Sonde (7) gemäß einem der voranstehenden Ansprüche.

13. Herstellungsverfahren einer Sonde gemäß Anspruch 8 bis 11, umfassend die folgenden Stufen:
- Realisierung der Leiter (8, 9) und der Membran (10) per Extrusion aus einem einzigen Stück,
- im Verlauf der Extrusion, Positionierung des Ansatzstücks (14) am distalen Ende der Leiter (8, 9), wobei das Ansatzstück (14) auf Verschiebungsmitteln montiert ist, die dieselbe Bewegung und dieselbe Geschwindigkeit haben wie die der Extrusion,
- Anschluss der Leiter (8, 9) und des Ansatzstücks (14) per Verschweißen durch eine Schweißvorrichtung, die sich in derselben Geschwindigkeit fortbewegt wie die der Extrusion.

## Claims

1. A geothermal probe (7), comprising only two parallel pipes (8, 9) and an intermediate membrane (10) joining the pipes (8, 9), wherein the membrane (10) is a continuous web along the probe (7) and has a constant thickness between the junction areas of the membrane (10) with the pipes (8, 9), **characterised by** the fact that the membrane (10) has a thickness less than that of the wall (13) of the pipes (8, 9), that the junction areas comprise connection shoulders (12) on each pipe (8, 9), the radius of the connection shoulders (12) being 2 mm, and that the length of the membrane (10) is around ten times the thickness of the membrane (10).

2. A probe (7) according to the preceding claim, wherein the thickness of the membrane (10) is between 0.7 mm and 1.7 mm.

3. A probe (7) according to claim 1, wherein the thickness of the membrane (10) is between 1 mm and 1.4 mm.

4. A probe (7) according to claim 1, wherein the thickness of the membrane (10) is 1.2 mm.

5. A probe (7) according to one of the preceding claims, wherein the length of the membrane (10) is between 10 mm and 16 mm.

6. A probe (7) according to one of the preceding claims, wherein the pipes (8, 9) and the membrane (10) are made from high-density polyethylene formed in a single extruded piece.

7. A probe (7) according to one of the preceding claims, wherein the pipes (8, 9) are tubes with a circular cross section and the walls of which have a thickness of between 2.7 mm and 3.1 mm.

8. A probe (7) according to one of the preceding claims, comprising a connecting piece (14) connecting the pipes (8, 9) at their distal end.

9. A probe (7) according to the preceding claim, wherein the connecting piece (14) comprises a fixing means of a ballast.

10. A probe (7) according to the preceding claim, wherein the fixing means comprises two attachment holes situated symmetrically on either side of the longitudinal axis of the probe (7).

11. A probe (7) according to one of claims 1 to 10, wherein the connecting piece (14) comprises a female fitting portion (15) wherein the distal end of the pipes (8, 9) is inserted.

12. A geothermal installation comprising at least one probe (7) according to one of the preceding claims.

13. A method for manufacturing a probe according to one of claims 8 to 11, comprising the following steps:
- producing the pipes (8, 9) and the membrane (10) by extrusion in a single piece,
- during the extrusion, positioning the connecting piece (14) at the distal end of the pipes (8, 9), the connecting piece (14) being mounted on movement means having the same movement and the same speed as the extrusion movement and speed,
- connecting, by welding, the pipes (8, 9) and the connecting piece (14) by means of a welding device moving at the same speed as the extrusion speed.
